# EUROPEAN PATENT SPECIFICATION

(11) **EP 2 475 157 B1**
(45) Date of publication and mention of the grant of the patent: **18.10.2017**
(21) Application number: 11196054.8
(22) Date of filing: 29.12.2011
(51) Int. Cl.: H04M 3/42

(54) **METHOD AND APPARATUS FOR MANAGING TELEPHONE SERVICES OF A USER COMMUNICATION DEVICE WHEN A SERVER PROVIDING THOSE TELEPHONE SERVICES IS UNAVAILABLE**
VERFAHREN UND VORRICHTUNG ZUR VERWALTUNG VON TELEFONDIENSTEN EINER BENUTZERKOMMUNIKATIONSVORRICHTUNG, WENN EIN SERVER, DER DIESE TELEFONDIENSTE BEREITSTELLT, NICHT VERFÜGBAR IST
PROCÉDÉ ET APPAREIL POUR LA GESTION DES SERVICES TÉLÉPHONIQUES D'UN DISPOSITIF DE COMMUNICATION D'UTILISATEUR LORSQUE LE SERVEUR FOURNISSANT CES SERVICES TÉLÉPHONIQUES N'EST PAS DISPONIBLE

(30) Priority: 10.01.2011 FR 1150159
(43) Date of publication of application: 11.07.2012
(73) Proprietor: ALCATEL LUCENT, 92100 Boulogne-Billancourt (FR)
(72) Inventor: Richert Jérémy, 67400 Illkirch Cedex (FR); Helbert, Emmanuel, 67400 Illkirch cedex (FR)
(74) Representative: Berthier, Karine

(56) References cited:
- US-A1- 2008 275 941
- US-A1- 2009 209 239

## Description

### Technical field

The invention pertains to communication networks, and more specifically, to the management of telephone services that are used by users of communication networks (whether wired or wireless), who have at least one communication device.

Here, the term "communication device" refers to any equipment that has a communication module capable of connecting to at least one network (whether wired or wireless) in order to establish communications with at least one other communication device and/or at least one network device. It may therefore be, for example, a landline or mobile telephone, potentially a so-called "smartphone," or a desktop or laptop computer, or a personal digital assistant (PDA), or a digital graphics tablet.

### State of the art

Many communication networks comprise a server called the main server, which comprises management means capable of managing telephone services in a centralized way as a function of rules which have been defined (at least partially) by users who have at least one communication device. This makes it possible not only to release communication devices from certain tasks, but also to offer users with multiple communication devices the ability to set a general policy for using them. This additionally makes it possible to dissociate the communication device from its user, by centralizing some of that user's data on a main server rather than on its communication device.

Each user is associated with an identifier that, whenever it is dialed by another user's communication device during a call, enables a main server to process that call based on management rule(s) defined by the called user. For communication forwarding (to another communication device or to an e-mail service), or alarm triggers, or conferences. Here, the term "management rule" refers to a rule that may be partially or fully applied by a single communication device or a server. It should be noted that some management rules may apply outside of any communication context. This is particularly true of alarm management.

For instance, the document US 2008/275941 describes a communication network that comprises a main server, which comprises management means capable of managing telephone services in a centralized way as a function of rules which have been defined (at least partially) by users who have at least one communication device.

### Summary of the invention

The main drawback of this centralized management of telephone services by a main server rests with the fact that none of these telephone services can be provided any longer when that main server is unavailable. This may prove bothersome when a user does not notice it quickly. Furthermore, it may cause the loss of management roles defined by the users, and therefore, whenever the main server becomes operational again, each user must redefine his or her management rules and then communicate them again to the main server, which constitutes a waste of time and requires that the user intervene, harming the overall communication system's ease of use.

Certainly, some communication devices are capable of locally providing, at least partially, some telephone services when they are reconfigured for that purpose. However, this is only true for themselves, not for their users' different communication devices. Consequently, in some situations, whenever a main server is unavailable, it may become completely impossible to reach a user, even if his or her communication devices may be reached via a backup server (generally a SIP ("Session Initiation Protocol") server tasked with temporarily and very partially substituting for the main server. It should be understood that if a user's call is routed to a backup server that does not have the users' management rules, it is likely that it would automatically be routed to the communication device known as the called user's master device, at which the user might not be reachable.

It should be noted that the backup server offers several benefits compared to so-called mirror servers which are copies of the main servers. They are inexpensive and easy to implement because they generally only provide basic telephone services. Furthermore, even when there are mirror servers, a backup server may act as a fallback solution in a worst-case scenario in which none of the other associated servers is accessible.

It is therefore a purpose of the invention to improve the situation when the users of communication networks have at least one communication device capable of locally providing, at least partially, some telephone services.

According to a first aspect, the invention proposes an apparatus managing telephone services for a communication device of a user who may be reached via a main server that has first management means capable of managing telephone services based on stored user rules, or via a backup server in the event that said main server is unavailable, **characterized** in that it comprises:
- querying means operative to obtain from said main server at least each stored rule related to said user and to a telephone service that may be provided at least in part by said communication device, in order to store it into said communication device so that it is available when the main server is unavailable,
- and a second management means operative to manage each telephone service concerned by an obtained and stored rule based on that rule, instead of said main server, whenever that server is unavailable.

The apparatus may comprise other characteristics that may be taken separately or in combination, and in particular:
- its second management means may be configured to manage telephone services that are chosen from among (at least) call forwarding, alarm triggering, and a conference;
- its querying means may be operative to obtain from the main server each stored rule that relates to the user, in order to store it locally or not;
- its second management means may be operative, when the main server is unavailable, to control the communication device's connection to the backup server, in order to activate within the communication device each telephone service that is concerned by an obtained and stored rule and which may be at least partially provided by that communication device;
   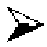 its second management means may be operative, when the main server is available again after having been unavailable, to control the closing of the connection between the communication device and the backup server, then to control the communication device's connection to the main server and to deactivate within the communication device each telephone service that had previously been activated locally;
      - its second management means may be operative to determine, for each obtained and stored rule, if that rule must be transmitted and applied on the main server;
      - its second management means may also be operative to control the transmission to the main server by the communication device of each obtained and stored rule.

According to a second aspect, the invention proposes a communication device comprising a telephone service management apparatus of the type presented above.

According to a third aspect, the invention proposes a method for managing telephone services for a communication device of a user who may be reached via a main server capable of managing telephone services based on stored user rules, or via a backup server in the event that said main server is unavailable, **characterized** in that it comprises:
- a step wherein said communication device obtains from said main server at least each stored rule related to said user and to a telephone service that may be provided at least in part by said communication device, in order to store it into said communication device so that it is available when the main server is unavailable,
- and a step wherein said communication device manages each telephone service concerned by an obtained and stored rule based on that rule, instead of said main server, whenever that server is unavailable.

The method may comprise other characteristics that may be taken separately or in combination, and in particular:
- during step (a) the communication device may obtain from the main server each stored rule related to the user, in order to store it, locally or not;
- during step (b), whenever the main server is unavailable, the communication device may connect to the backup server, then activate each telephone service that is concerned by a rule that it had obtained and stored and that it may at least partially provide;
   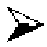 during step (b), whenever the main server is available again after having been unavailable, the communication device may close its connection with the backup server, then connect to the main server and deactivate each telephone service that had previously been activated locally;
      - during step (b), the communication device may determine for each obtained and stored rule whether that rule must be transmitted and applied on the main server;
      - during step (b), the communication device may transmit to the main server each obtained and stored rule.

### Brief description of the drawings

Other characteristics and advantages of the invention will become apparent upon examining the detailed description below, and the attached drawings, wherein:

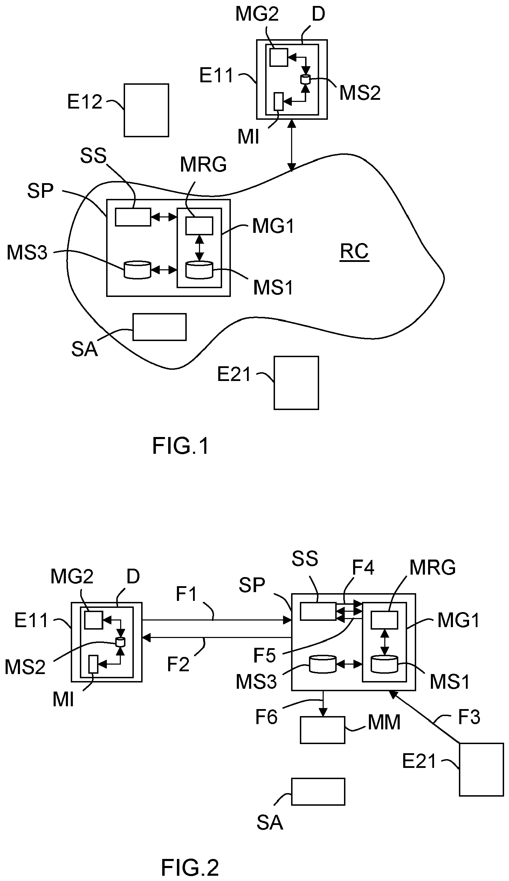

- Figure 1 very schematically and functionally depicts a communication network comprising a main server and a backup server to which users' communication devices, one of which is equipped with a management apparatus according to the invention, may connect,
- Figure 2 very schematically and functionally depicts an example of interactions occurring between the main server, a communication device of a first user (equipped with a management apparatus according to the invention), a communication device of a second user, and a voicemail module, whenever the first user decides to forward the calls concerning him or her to his or her voicemail and the second user attempts to reach that first user,

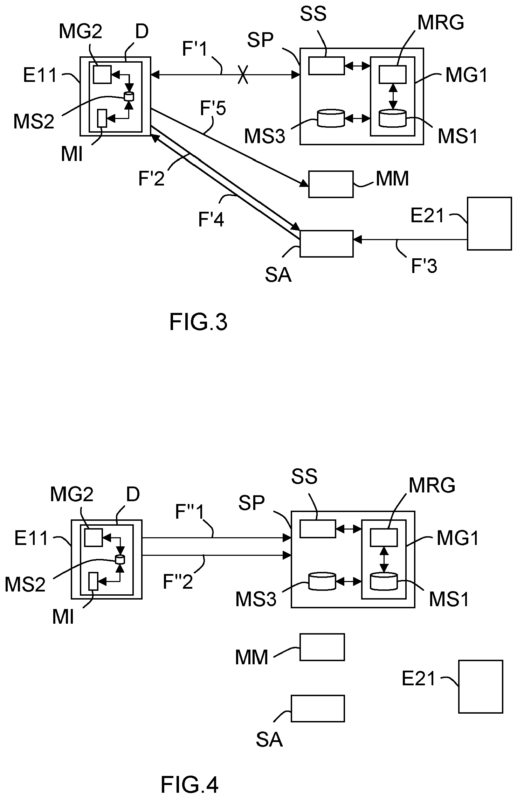

- Figure 3 very schematically and functionally depicts an example of interactions occurring between the backup server, a communication device of a first user (equipped with a management apparatus according to the invention), a communication device of a second user, and a voicemail module, whenever the first user has forwarded the calls concerning him or her to his or her voicemail and the second user attempts to reach the first user while the main server is unavailable, and
- Figure 4 very schematically and functionally depicts an example of interactions occurring between the main server and a communication device of a first user (equipped with a management apparatus according to the invention), when the main server is available again after having been unavailable.

The appended drawings constitute part of the description of the invention as well as contributing to the definition of the invention, if necessary.

### Detailed description

It is an object of the invention to enable at least partial continuity of telephone services for users of communication network(s) (RC) who have at least one communication device (Eij), whenever the main server to which that device is connected is unavailable.

It should be noted that the invention pertains to any type of communication network, whether wired or wireless, that comprises at least one main server (SP) associated with a backup server (SA).

Here, the term "main server" refers to a server capable of managing telephone services in a centralized manner based on rules that have been defined (at least partially) by users. Furthermore, here the term "backup server" refers to a server capable of taking up the duties of a main server, at least with respect to the management of communication sessions using a session management protocol.

In what follows, it is assumed by way of a nonlimiting example that the session management protocol is SIP (Session Initiation Protocol). However, the invention is not limited to this type of session management protocol.

Figure 1 schematically depicts a nonlimiting example of a communication network RC, comprising a main server SP and a backup server SA, associated with one another, as well as communication devices Eij of users which may connect to that main server SP or to that backup server SA when the main server SP is unavailable.

It should be noted that the letter i designates a user. Here, it takes on the values 1 and 2 because only two users are considered. However, it may serve to designate more than two users. Furthermore, the letter j designates a communication device of a user (i). Here, it takes on the values of 1 and 2 for the first user (i = 1) because that user has two communication devices, and the value 1 for the second user (i = 2) because that user has only one communication device.

It should be noted that it is not mandatory for a user to have multiple (at least two) communication devices. What is important is the fact that there must preferentially be a reason that a telephone service or function must be offered by a main server. This reason may be, for example, the need for centralized management (particularly for forwarding or an alarm), or the inability of a communication device to offer a telephone service or function partially and/or under certain conditions (particularly during a conference).

Furthermore, in the nonlimiting example depicted in Figure 1, only the first (communication) device E11 of the first user (i = 1) is provided with a management apparatus D according to the invention. However, the second (communication) device E12 of the first user (i = 1) and/or the device E21 of the second user (i = 2) may be provided with a management apparatus D according to the invention.

It is assumed in what follows, by way of a nonlimiting example, that the first device E11 of the first user (i =1) is a desktop computer, and that the second device E12 of the first user (i = 1) and the device E21 of the second user (i = 2) are mobile telephones (potentially smartphones). However, the invention is not limited to these examples of communication devices. It pertains to any type of communication device that has a communication module capable of connecting to at least one (wired or wireless) network in order to establish communications with at least one other communication device and/or at least one network device. They may therefore also be, for example, landline telephones, or laptop computers, or personal digital assistants (or PDAs), or digital graphics tablets.

It is important to note that a management apparatus D according to the invention can only be installed within a communication device Eij that is capable of locally providing, at least partially, some telephone services, such as communication forwarding to another communication device or network device, or alarm triggering, or a conference between at least three users (including its own).

It is also important to note that the invention pertains to the continuity of telephone services or functions that are offered by a communication server and which may be provided locally, in full or in part, by a communication device when that communication server is not accessible.

As depicted in Figures 1 to 4, in order to be able to provide the telephone services (or functions), the main server SP comprises first management means MG1, a session management server SS (here a SIP server) and (third) storage means MS3.

The SIP server SS is tasked with managing the communication sessions of some users (i) by way of the session management protocol SIP. It is therefore this server that receives from the (communication) network RC the calls (or communications) that concern those users (i).

The third storage means MS3 are tasked with storing all information that relates to the users (i) as well as to their various devices Eij, preferentially outside the management rules which will be discussed later on. They may be in any form whatsoever known to the person skilled in the art, and particularly in the form of a memory (potentially software memory), or a database, or a computer file. This information may be used by the first management means MG1 in collaboration with the SIP server SS each time that the SIP server SS must process a call concerning at least one device Eij of a user (i).

The first management means MG1 are configured so as to manage telephone services for users (i) as a function of (management) rules which had been at least partially defined by those users (i). For this reason, and as depicted in a nonlimiting example in Figures 1 to 4, the first management means MG1 may comprise a rules management engine MRG, tasked with determining the processing that must be applied to a call (or communication) concerning a user (i), which had been received by the SIP server SS, in accordance with one or more management rule(s) of that user (i), which may be stored within first storage means MS1. The first storage means MS1 are tasked here with storing (management) rules concerning users, such as, for example, forwarding (or routing) rules, alarm rules, and rules regarding rights to services. As reminder, these management rules are provided at least in part by the devices Eij of the users (i). They may also come from a configuration sent by a network administrator and stored within the third storage means MS3, then obtained during consultations by the rules management engine MRG.

It should be noted that the first storage means MS1 may potentially form part of the third storage means MS3. They may come in any form whatsoever known to the person skilled in the art, and particularly in the form of a memory (potentially software memory), or a database, or a binary or text computer file. It should also be noted that the rules management engine MRG may, for example, have a table establishing matches between user identifiers and communication device identifiers Eij.

A telephone services management apparatus D, according to the invention, comprises at least querying means MI and second management means MG2.

The querying means MI are operative to obtain from the main server SP at least each rule that is stored within its first storage means MS1 and/or third storage means MS3 and which concerns the user (i) who has the device Eij that contains them and is related to a telephone service that may be at least partially provided by that device Eij, in order to store, either locally (i.e. within the device Eij) or within any other apparatus (or device or element) accessible by the device Eij, such as, for example, a removable memory card, a data storage disk connected to the device Eij by a wired or wireless connection, or a data server (virtual or not) located within a data network ("cloud").

It should be noted that the local storage is carried out within second storage means MS2 that form part of the (management) apparatus D, as depicted in nonlimiting fashion in Figures 1 to 4, or which form part of the device Eij. These two storage means MS2 may come in any form known to the person skilled in the art, and particularly in the form of a memory (potentially software memory) or a file.

It should be noted that storage within a device or element distinct from Eij (and therefore external) is carried out within fourth storage means (not depicted) which may form part of a related apparatus directly connected to the device Eij by a wire or wirelessly, or which form part of a set of data stored and configured within a data server (virtual or not) accessible within a data network. These for the storage means may come in any form whatsoever known to the person skilled in the art, and particularly in the form of a memory (potentially software memory), a database, or a file.

The second management MG2 are operative to manage, instead of the main server SP, whenever that main server SP is unavailable, each telephone service that is concerned by a rule of a user, which had been obtained from the main server SP and which is stored (in the second MS2 or fourth storage means), as a function of that rule.

In other terms, the invention particularly proposes that a user device Eij stores, locally or within an external device or element, a copy of at least some of the telephone service management rules that concern that user and which are also stored within the main server SP in order to be able to at least partially provide at least some of those telephone services when the main server SP is unavailable (due to a failure or problem within its communication network RC). This way, the device Eij is capable of ensuring at least partial continuity of telephone services that relate to its user (i) and therefore at least some of that user's (i) device Eij.

It should be noted that it is preferable that the querying means MI obtain from the main server SP all the rules that it is storing within its first storage means MS1 and/or the third storage means MS3 and which relate to their user (i), in order to store them within the second MS2 and/or fourth storage means. This enables the device Eij in question to have all of the rules of its user (i), even if some of them relate to phone services that it cannot, or cannot fully, provide, and therefore enables them to be capable of retransmitting all of these rules to the main server SP once it is operational or available again.

Figure 2 schematically depicts one example of interactions occurring between the main server SP, the first device E11 of the first user (i = 1), the second user's device (i = 2), and a voicemail module MM of the communication network RC, which is tasked with storing the voice messages intended for the first user, when that user has defined a rule intended to cause the forwarding of all the calls that concern him or her to his or her voicemail and the second user attempts to reach that first user.

The first interaction is shown by the arrow F1. It pertains to the transmission to the first server SP, by the first device E11 (upon the request of the querying means MI of its apparatus D), a message containing a management rule of the first user (i = 1). For example, the purpose of this rule is to route each call intended for the first user to that user's voicemail MM. This message here is preferentially compliant with the SOAP or HTTP protocol. This message is received by the SIP server SS from the main server SP, which transmits it to the first management means MG1. The rules management engine MRG will then store the rule (contained within the message) in the first storage means MS1 and/or the third storage means MS3, then it notifies the SIP server SS of that storage.

The second interaction is shown by the arrow F2. It pertains to the transmission to the first device E11, by the main server SP, of a reply message reporting that the user's rule has been stored and that it will therefore be taken into account. This message may, for example, be compliant with the SIP or SOAP or HTTP protocol (it is replying to the request represented by the first interaction F1). This message is received by the first device E11, then transmitted to its apparatus D.

The third interaction is shown by the arrow F3. It pertains to an attempt to call the first user (i = 1), via the main server SP, by the device E21 of the second user (i = 2). The call request here is preferentially compliant with the SIP protocol. This call request is received by the SIP server SS from the main server SP.

The fourth interaction is shown by the arrow F4. It pertains to the transmission to the first management means MG1 by the SIP server SS of a request intended to obtain a rule, if any, pertaining to the first user (i = 1), who is being called. Once that request is received, the rules management engine MRG determines within the first storage means MS1 and/or the third storage means MS3 if there is a rule regarding the first user (i = 1). In the present situation, it is a call forwarding rule pointing towards the voicemail module MM in charge of the first user.

The fifth interaction is shown by the arrow F5. It pertains to the transmission to the SIP server SS by the first management means MG1 of a reply message designating the identifier of the voicemail module MM to which the call must be routed.

The sixth interaction is shown by the arrow F6. It pertains to the routing of the device's call E21 to the voicemail module MM designated within the response message provided by the first management means MG1.

Whenever a device Eij that has an apparatus D detects that the main server SP is unavailable, the second management means MG2 of its apparatus D control the connection of their device Eij to the backup server SA. Next, they activate within their device Eij each telephone service that is concerned by a rule previously obtained and stored (within the second MS2 and/or fourth storage means) and which may be at least partially provided by their device Eij.

Figure 3 schematically depicts one example if interactions occurring between the main server SA, the first device E11 of the first user (i = 1), the second user's device (i = 2), and a voicemail module MM of the communication network RC, which is tasked with storing the voice messages intended for the first user, when that user has defined a rule intended to cause the forwarding of all the calls that concern him or her to his or her voicemail and the second user attempts to reach that first user.

In Figure 3, the arrow F'1 is crossed out in order to show that the first device E11 cannot reach the main server SP.

The first interaction is shown by the arrow F'2. It pertains to the connection of the first device E11 to the backup server SA (upon the request of the second management means MG2 of the apparatus D).

The second interaction is shown by the arrow F'3. It pertains to an attempt to call the first user (i = 1), via the backup server SA, by the device E21 of the second user (i = 2). The call request here is preferentially compliant with the SIP protocol.

The second interaction is shown by the arrow F'4. It pertains to the routing of the call to the first device E11. When the call request is received, the first device E11 transmits it to its apparatus D, and more specifically to its second management means MG2 which are tasked with processing the incoming call in accordance with the forwarding rule stored within the second MS2 and/or fourth storage means.

The fourth interaction is shown by the arrow F'5. It pertains to the routing of the incoming call by the first device E11 towards the voicemail module MM in charge of the first user, upon the request of the second management means MG2. This routing may be carried out either directly by the device E11, or with the help of the session management protocol (here, SIP) in cooperation with the backup server SA.

Whenever a device Eij that has an apparatus D detects that the main server SP is once again available after having been unavailable, the second management means MG2 of its apparatus control the closing of the connection between their device Eij and the backup server SA. Next, they control the connection of their device Eij to the main server SP and disable within their device Eij each telephone service that they had previously activated locally. This connection is shown by the arrow F"1 in Figure 4.

It should be noted that the second management means MG2 of the apparatus D of a device Eij may also control the transmission to the main server SP (which is reachable again) by that device Eij of each rule previously obtained and stored within the second MS2 and/or fourth storage means. This transmission is shown by the arrow F"2 in Figure 4. It makes possible to immediately reconfigure the main server SP so that it can once again process the calls intended for the device Eij based on all of the transmitted rules, instead of said device Eij. This may make it possible to update the first storage means MS1 and/or the third storage means MS3 of the main server SP, in the event that they had not lost the rules stored during the main server's SP period of unavailability and that the user had edited those specific rules during that period of unavailability.

It should also be noted that instead of the device Eij providing its user's rules (stored within the second MS2 and/or fourth storage means), the device Eij may retrieve the rules regarding its user, upon the request of second management means MG2 of its apparatus D. Such a situation may particularly arise when a user has multiple devices Eij each equipped with an apparatus D. It shall be understood that in this situation, one of these devices Eij may have provided to the main server SP edited rules without another one of these devices Eij' having been informed. In the event that the two devices Eij and Eij' each have one apparatus D, an algorithm may be necessary to decide which rules must be applied. By way of nonlimiting example, it is possible, for example, to timestamp within the first MS1, second MS2, third MS3, or fourth storage means the rules which have been stored there, in order to represent the dates on which they respectively became active. The algorithm may in this case be of the type described below.

When a device Eij detects that the main server SP is reachable again, that device Eij may select a random value within a time window lasting several minutes (for example, on the order of 10 to 20 minutes - it should be noted that the countdown does not necessarily start at the same time on both devices Eij and Eij' because the start is synchronized to the moment when it is detected that the main server SP is once again available). When this value expires, the device Eij retrieves the rules from the main server SP.

If these rules are different from the ones stored within the second MS2 or fourth storage means associated with the device Eij were different from the ones that are stored within the second MS2' or fourth storage means associated with the device Eij', the date associated with those roles within the two devices Eij and Eij' may be compared.

If for one of the two devices Eij and Eij' the rules stored within the second MS2 (or MS2') or associated fourth storage means are more recent than those stored in the first storage means MS1 and/or third storage means MS3, then the device in question Eij or Eij' updates the rules on the main server SP.

It shall also be noted that an apparatus D is preferentially constructed in the form of software (or computer) modules. However, it may also be constructed in the form of a combination of electronic circuits and software module.

It is important to note that, according to one aspect, the invention may also be considered from the angle of a management method, which may particularly be implemented by way of a management apparatus D of the type presented above. As the functionalities provided by the implementation of the method according to the invention are identical to those provided by the management apparatus D introduced above, only the combination of the main functionalities provided by the method is presented hereafter.

This method comprises two steps (a) and (b).

Step (a) consists of obtaining from the main server SP, with a device Eij of a user, at least each rule that it is storing, which relates to that user and to a telephone service that may be provided at least in part by that device Eij, in order to store it locally (in that device Eij)) or within a distinct device or element.

Step (b) consists of managing within the device Eij each telephone service that is concerned by an obtained and stored rule (during a step (a)) based on that rule, instead of the main server, when that main server is unavailable.

The invention is not limited to the embodiments of the management apparatus, communication device, and management method described above, which are given only as examples, but rather encompasses all variants that the person skilled in the art may envision within the framework of the claims below.

## Claims

1. An apparatus (D) managing telephone services for a communication device (Eij) of a user who may be reached via a main server (SP) that has first management means (MG1) capable of managing telephone services based on stored user rules, or via a backup server (SA) in the event that said main server (SP) is unavailable, **characterized in that** it comprises:
- querying means (MI) operative to obtain from said main server (SP) at least each stored rule related to said user and to a telephone service that may be provided at least in part by said communication device (Eij), in order to store it into said communication device (Eij) so that it is available when the main server (SP) is unavailable,
- and a second management means (MG2) operative to manage each telephone service concerned by an obtained and stored rule based on that rule, instead of said main server (SP), whenever that server (SP) is unavailable.

2. An apparatus according to claim 1, wherein said second management means (MG2) are operative to manage telephone services chosen from a group that comprises at least one communication forwarding one alarm trigger, and one conference.

3. An apparatus according to one of the claims 1 and 2, wherein said querying means (MI) are operative to obtain from said main server (SP) each stored rule related to said user, in order to store it.

4. An apparatus according to one of the claims 1 to 3, wherein said second management means (MG2) are operative, whenever said main server (SP) is unavailable, to control the connection of said communication device (Eij) to said backup server (SA), then to activate within said communication device (Eij) each telephone service concerned by an obtained and stored rule and that may be provided at least in part by that communication device (Eij).

5. An apparatus according to claim 4, wherein said second management means (MG2) are operative, whenever said main server (SP) is once again available after having been unavailable, to control the closing of the connection between said communication device (Eij) and said backup server (SA), then to control the connection of said communication device (Eij) to said main server (SP) and to deactivate within said communication device (Eij) each telephone service that had previously been activated locally.

6. An apparatus according to claim 5, wherein said second management means (MG2) are operative to determine for each obtained and stored rule if that rule must be transmitted and applied on said main server (SP).

7. An apparatus according to one of the claims 5 and 6, wherein said second management means (MG2) are also configured to control the transmission to said main server (SP) by said communication device (Eij) of each obtained and stored rule.

8. A communication device (Eij) comprising a telephone service management apparatus (D) according to one of the preceding claims.

9. A method for managing telephone services for a communication device (Eij) of a user who may be reached via a main server (SP) capable of managing telephone services based on stored user rules, or via a backup server (SA) in the event that said main server (SP) is unavailable, **characterized in that** it comprises:
- a step (s) wherein said communication device (Eij) obtains from said main server (SP) at least each stored rule related to said user and to a telephone service that may be provided at least in part by said communication device (Eij), in order to store it into said communication device (Eij) so that it is available when the main server (SP) is unavailable,
- and a step (b) wherein said communication device (Eij) manages each telephone service concerned by an obtained and stored rule based on that rule, instead of said main server (SP), whenever that server (SP) is unavailable.

10. A method according to claim 9, wherein telephone services are managed which are chosen from the group comprising at least communication forwarding, alarm triggering, and a conference.

11. A method according to one of the claims 9 and 10, wherein during step (a) said communication device (Eij) obtained from said main server (SP) each stored rule related to said user, in order to store it.

12. A method according to one of the claims 9 to 11, wherein during step (b) whenever said main server (SP) is unavailable said communication device (Eij) connects to said backup server (SA), then activates each telephone service concerned by a rule that it has obtained and stored and that it may provide at least in part.

13. A method according to claim 12, wherein during step (b) whenever said main server (SP) is once again available after having been unavailable, said communication device (Eij) closes its connection with said backup server (SA), then connects to said main server (SP) and deactivates each telephone service prior to having been locally activated.

14. A device according to claim 13, wherein said communication device (Eij) determines for each obtained and stored rule if that rule must be transmitted and applied to said main server (SP).

15. A method according to claim 13, wherein during step (b) said communication device (Eij) transmits to said main server (SP) each obtained and stored rule.

## Patentansprüche

1. Vorrichtung (D) zum Verwalten von Telefondiensten für eine Kommunikationsvorrichtung (Eij) eines Benutzers, der erreicht werden kann über einen Hauptserver (SP), der erste Verwaltungsmittel (MG1) aufweist und Telefondienste verwalten kann, aufbauend auf gespeicherten Benutzerregeln, oder über einen Backup-Server (SA), falls besagter Hauptserver (SP) nicht verfügbar ist, **dadurch gekennzeichnet, dass** sie umfasst:
- Abfragemittel (MI), wirksam, um vom besagten Hauptserver (SP) mindestens jede gespeicherte Regel bezogen auf besagten Benutzer und auf einen Telefondienst zu erhalten, die mindestens teilweise von besagter Kommunikationsvorrichtung (Eij) bereitgestellt werden kann, um diese in besagter Kommunikationsvorrichtung (Eij) zu speichern, sodass sie verfügbar ist, wenn der Hauptserver (SP) nicht verfügbar ist,
- und ein zweites Verwaltungsmittel (MG2), wirksam zum Verwalten von jedem Telefondienst, der von einer erhaltenen und gespeicherten Regel betroffen ist, aufbauend auf dieser Regel und anstelle des besagten Hauptservers (SP), immer dann, wenn dieser Server (SP) nicht verfügbar ist.

2. Vorrichtung nach Anspruch 1, wobei besagte zweite Verwaltungsmittel (MG2) wirksam sind zum Verwalten von Telefondiensten, gewählt aus einer Gruppe, die mindestens eine Kommunikationsweiterleitung, einen Alarmauslöser und eine Konferenz umfasst.

3. Vorrichtung nach einem der Ansprüche 1 und 2, wobei besagte Abfragemittel (MI) wirksam sind zum Erhalten von jeder gespeicherten Regel bezogen auf besagten Benutzer von besagtem Hauptserver (SP), um diese zu speichern.

4. Vorrichtung nach einem der Ansprüche 1 bis 3, wobei besagte zweite Verwaltungsmittel (MG2) wirksam sind, und zwar immer dann, wenn der Hauptserver (SP) nicht verfügbar ist, zum Steuern der Verbindung von besagter Kommunikationsvorrichtung (Eij) zu besagtem Backup-Server (SA) und dann zum Aktivieren innerhalb besagter Kommunikationsvorrichtung (Eij) von jedem Telefondienst, der von einer erhaltenen und gespeicherten Regel betroffen ist und die mindestens teilweise von dieser Kommunikationsvorrichtung (Eij) bereitgestellt werden kann.

5. Vorrichtung nach Anspruch 4, wobei besagte zweite Verwaltungsmittel (MG2) wirksam sind, und zwar immer dann, wenn der Hauptserver (SP) wieder verfügbar ist nachdem er nicht verfügbar war, zum Steuern der Trennung der Verbindung zwischen besagter Kommunikationsvorrichtung (Eij) und besagtem Backup-Server (SA) und dann zum Steuern der Verbindung von besagter Kommunikationsvorrichtung (Eij) zum besagten Hauptserver (SP) und zum Deaktivieren innerhalb der besagten Kommunikationsvorrichtung (Eij) von jedem Telefondienst, der zuvor lokal aktiviert war.

6. Vorrichtung nach Anspruch 5, wobei besagte zweite Verwaltungsmittel (MG2) wirksam sind, um für jede erhaltene und gespeicherte Regel zu ermitteln, ob diese Regel an besagten Hauptserver (SP) übertragen und auf diesen angewendet werden muss.

7. Vorrichtung nach einem der Ansprüche 5 und 6, wobei besagte zweite Verwaltungsmittel (MG2) außerdem konfiguriert sind zum Steuern der Übertragung an besagten Hauptserver (SP) über besagte Kommunikationsvorrichtung (Eij) von jeder erhaltenen und gespeicherten Regel.

8. Kommunikationsvorrichtung (Eij), umfassend eine Telefondienst-Verwaltungsvorrichtung (D) nach einem der vorstehenden Ansprüche.

9. Verfahren zum Verwalten von Telefondiensten für eine Kommunikationsvorrichtung (Eij) eines Benutzers, der erreicht werden kann über einen Hauptserver (SP), der Telefondienste verwalten kann, aufbauend auf gespeicherten Benutzerregeln, oder über einen Backup-Server (SA), falls besagter Hauptserver (SP) nicht verfügbar ist, **dadurch gekennzeichnet, dass** es umfasst:
- einen Schritt (s), wobei besagte Kommunikationsvorrichtung (Eij) von besagtem Hauptserver (SP) mindestens jede gespeicherte Regel bezogen auf besagten Benutzer und auf einen Telefondienst erhält, die mindestens teilweise von besagter Kommunikationsvorrichtung (EiJ) bereitgestellt werden kann, um diese in besagter Kommunikationsvorrichtung (Eij) zu speichern, sodass sie verfügbar ist, wenn der Hauptserver (SP) nicht verfügbar ist,
- und einen Schritt (b), wobei besagte Kommunikationsvorrichtung (Eij) jeden Telefondienst verwaltet, der von einer erhaltenen und gespeicherten Regel betroffen ist, aufbauend auf dieser Regel und anstelle des besagten Hauptservers (SP), immer dann, wenn dieser Server (SP) nicht verfügbar ist.

10. Verfahren nach Anspruch 9, wobei Telefondienste verwaltet werden, welche aus der Gruppe gewählt werden, die mindestens Kommunikationsweiterleitung, Alarmauslöser und eine Konferenz umfasst.

11. Verfahren nach einem der Ansprüche 9 und 10, wobei während Schritt (a) besagte Kommunikationsvorrichtung (Eij) jede gespeicherte Regel bezogen auf besagten Benutzer von besagtem Hauptserver (SP) erhalten hat.

12. Verfahren nach einem der Ansprüche 9 bis 11, wobei während Schritt (b), und zwar immer dann, wenn der Hauptserver (SP) nicht verfügbar ist, besagte Kommunikationsvorrichtung (Eij) sich mit besagtem Backup-Server (SA) verbindet und dann jeden Telefondienst aktiviert, der von einer Regel betroffen ist, die sie erhalten und gespeichert hat und die sie mindestens teilweise bereitstellen kann.

13. Verfahren nach Anspruch 12, wobei während Schritt (b), und zwar immer dann, wenn der Hauptserver (SP) wieder verfügbar ist nachdem er nicht verfügbar war, besagte Kommunikationsvorrichtung (Eij) ihre Verbindung mit besagtem Backup-Server (SA) schließt und sich dann mit jedem Hauptserver (SP) verbindet und jeden Telefondienst deaktiviert, der zuvor lokal aktiviert war.

14. Vorrichtung nach Anspruch 13, wobei besagte Kommunikationsvorrichtung (Eij) für jede erhaltene und gespeicherte Regel ermittelt, ob diese Regel an besagten Hauptserver (SP) übertragen und auf diesen angewendet werden muss.

15. Verfahren nach Anspruch 13, wobei während Schritt (b) besagte Kommunikationsvorrichtung (Eij) jede erhaltene und gespeicherte Regel an besagten Hauptserver (SP) überträgt.

## Revendications

1. Appareil (D) de gestion de services téléphoniques destiné à un dispositif de communication (Eij) d'un utilisateur qui est accessible par un serveur principal (SP) disposant de premiers moyens de gestion (MG1) capables de gérer des services téléphoniques selon des règles d'utilisateur stockées, ou par un serveur auxiliaire (SA) dans le cas ou ledit serveur principal (SP) est indisponible, **caractérisé en ce qu'**il comprend :
- des moyens d'interrogation (MI) permettant d'obtenir à partir dudit serveur principal (SP) au moins chaque règle stockée relative audit utilisateur et à un service téléphonique qui peut être fourni au moins en partie par ledit dispositif de communication (Eij), afin de la stocker dans ledit dispositif de communication (Eij) de sorte qu'elle soit disponible lorsque le serveur principal (SP) est indisponible, et
- des deuxièmes moyens de gestion (MG2) permettant de gérer chaque service téléphonique concerné par une règle obtenue et stockée selon cette régle, à la place dudit serveur principal (SP), chaque fois que ce serveur (SP) est indisponible.

2. Appareil selon la revendication 1, dans lequel lesdits deuxièmes moyens de gestion (MG2) permettent de gérer des services téléphoniques choisis dans un groupe qui continent au moins une transmission de communication, un déclencheur d'alarme et une conférence.

3. Appareil selon l'une des revendications 1 et 2, dans lequel lesdits moyens d'interrogation (MI) permettent d'obtenir à partir dudit serveur principal (SP) chaque règle stockée relative audit utilisateur, afin de la stocker.

4. Appareil selon l'une des revendications 1 à 3, dans lequel lesdits deuxièmes moyens de gestion (MG2) permettent, chaque fois que ledit serveur principal (SP) est indisponible, de commander la connexion dudit dispositif de communication (Eij) audit serveur auxiliaire (SA), puis d'activer dans ledit dispositif de communication (Eij) chaque service téléphonique concerné par une règle obtenue et stockée et qui peut être fourni au moins en partie par ce dispositif de communication (Eij).

5. Appareil selon la revendication 4, dans lequel lesdits deuxièmes moyens de gestion (MG2) permettent, chaque fois que ledit serveur principal (SP) est à nouveau disponible après avoir été indisponible, de commander la fermeture de la connexion entre ledit dispositif de communication (Eij) et ledit serveur auxiliaire (SA), puis de commander la connexion dudit dispositif de communication (Eij) audit serveur principal (SP) et de désactiver dans ledit dispositif de communication (Eij) chaque service téléphonique qui avait été précédemment activé localement.

6. Appareil selon la revendication 5, dans lequel lesdits deuxièmes moyens de gestion (MG2) permettent de déterminer pour chaque règle obtenue et stockée si cette règle doit être transmise audit et appliquée sur ledit serveur principal (SP).

7. Appareil selon l'une des revendications 5 et 6, dans lequel lesdits deuxièmes moyens de gestion (MG2) sont également configurés pour commander la transmission audit serveur principal (SP) par ledit dispositif de communication (Eij) de chaque règle obtenue et stockée.

8. Dispositif de communication (Eij) comprenant un appareil de gestion de service téléphonique (D) selon l'une des revendications précédentes.

9. Procédé de gestion de services téléphoniques destiné à un dispositif de communication (Eij) d'un utilisateur qui est accessible par un serveur principal (SP) capable de gérer des services téléphoniques selon des règles d'utilisateur stockées, ou par un serveur auxiliaire (SA) dans le cas où ledit serveur principal (SP) est indisponible, **caractérisé en ce qu'**il comprend :
- une étape (s) dans laquelle ledit dispositif de communication (Eij) obtient à partir dudit serveur principal (SP) au moins chaque règle stockée relative audit utilisateur et à un service téléphonique qui peut être fourni au moins en partie par ledit dispositif de communication (Eij), afin de la stocker dans ledit dispositif de communication (Eij) de sorte qu'elle soit disponible lorsque le serveur principal (SP) est indisponible, et
- une étape (b) dans laquelle ledit dispositif de communication (Eij) gère chaque service téléphonique concerné par une règle obtenue et stockée selon cette règle, à la place dudit serveur principal (SP), chaque fois que ce serveur (SP) est indisponible.

10. Procédé selon la revendication 9, dans lequel des services téléphoniques sont gérés qui sont choisis dans un groupe comprenant au moins une transmission de communication, un déclenchement d'alarme et une conférence.

11. Procédé selon l'une des revendications 9 et 10, dans lequel au cours de l'étape (a) ledit dispositif de communication (Eij) a obtenu à partir dudit serveur principal (SP) chaque règle stockée relative audit utilisateur, afin de la stocker.

12. Procédé selon l'une des revendications 9 à 11, dans lequel au cours de l'étape (b) chaque fois que ledit serveur principal (SP) est indisponible ledit dispositif de communication (Eij) se connecte audit serveur auxiliaire (SA), puis active chaque service téléphonique concerné par une règle qu'il a obtenue et stockée et qu'il peut fournir au moins en partie.

13. Procédé selon la revendication 12, dans lequel au cours de l'étape (b) chaque fois que ledit serveur principal (SP) est à nouveau disponible après avoir été indisponible, ledit dispositif de communication (Eij) ferme sa connexion avec ledit serveur auxiliaire (SA), puis se connecte audit serveur principal (SP) et désactive chaque service téléphonique avant qu'il ne soit localement activé.

14. Dispositif selon la revendication 13, dans lequel ledit dispositif de communication (Eij) détermine pour chaque règle obtenue et stockée si cette règle doit être transmise audit et appliquée sur ledit serveur principal (SP).

15. Procédé selon la revendication 13, dans lequel au cours de l'étape (b) ledit dispositif de communication (Eij) transmet audit serveur principal (SP) chaque règle obtenue et stockée.
